(19) **Europäisches Patentamt**

**European Patent Office**

**Office européen des brevets**

(11) **EP 1 041 730 B1**

(12) **FASCICULE DE BREVET EUROPEEN**

(45) Date de publication et mention
de la délivrance du brevet:
**25.02.2004 Bulletin 2004/09**

(51) Int Cl.⁷: **H04B 1/707**

(21) Numéro de dépôt: **00400877.7**

(22) Date de dépôt: **30.03.2000**

(54) **Module récepteur et récepteur composé de plusieurs modules montés en cascade**

Empfangsmodul und Empfänger bestehend aus meheren kaskadierten Modulen

Receiver module and receiver composed of several cascaded modules

(84) Etats contractants désignés:
**DE GB IT**

(30) Priorité: **02.04.1999 FR 9904172**

(43) Date de publication de la demande:
**04.10.2000 Bulletin 2000/40**

(73) Titulaire: **Commisariat à l'énergie Atomique**
**75752 Paris 15ème (FR)**

(72) Inventeurs:
• **Noguet, Dominique**
  **38100 Grenoble (FR)**
• **Lequepeys, Jean-René**
  **38600 Fontaine (FR)**
• **Lattard, Didier**
  **38680 Rencurel (FR)**
• **Daniele, Norbert**
  **38330 Montbonnot (FR)**

(74) Mandataire: **Poulin, Gérard et al**
**Société BREVATOME**
**3, rue du Docteur Lancereaux**
**75008 Paris (FR)**

(56) Documents cités:
**US-A- 5 583 884**

## Description

### Domaine technique

La présente invention a pour objet un module récepteur et un récepteur composé de plusieurs modules montés en cascade.

L'invention trouve une application générale dans les communications numériques et plus particulièrement dans les réseaux locaux sans fil (WLAN), dans les boucles locales d'abonnés sans fil (WLL), en téléphonie mobile, en domotique et télécollecte, en communication dans les transports, en télévision câblée et en service multimédia sur les réseaux câblés, etc...

### Etat de la technique antérieure

L'invention relève de la technique d'étalement de spectre. On sait que cette technique consiste à moduler un symbole numérique par une séquence pseudo-aléatoire connue de l'utilisateur et à émettre ce symbole modulé. Chaque séquence est composée de N éléments appelés "chips", dont la durée est le $N^{\text{ième}}$ de la durée d'un symbole. Il en résulte un signal dont le spectre s'étale sur une plage N fois plus large que celle du signal original. A la réception, une démodulation est effectuée en corrélant le signal reçu avec la séquence utilisée à l'émission, ce qui permet de reconstituer le symbole de départ.

Les avantages de cette technique-sont nombreux :

- discrétion, car la puissance du signal émis étant constante et répartie dans une bande N fois plus large, la densité spectrale de puissance se retrouve réduite d'un facteur N ;
- immunité vis-à-vis des émissions à bande étroite (volontaires ou parasites), l'opération de corrélation réalisée au niveau du récepteur conduisant à l'étalement spectral de ces émissions ;
- difficulté d'interception (pour les rapports signal à bruit usuels), puisque la démodulation requiert la connaissance de la séquence utilisée à l'émission ;
- résistance aux trajets multiples qui, sous certaines conditions, provoquent des évanouissements sélectifs en fréquence et donc n'affectent que partiellement le signal émis ;
- possibilité d'un accès multiple à répartition par les codes (AMRC en abrégé ou CDMA en anglais pour "Code Division Multiple Access"), plusieurs liaisons à étalement de spectre par séquence directe pouvant partager la même bande de fréquence en utilisant des codes d'étalement orthogonaux.

Mais cette technique présente un inconvénient qui est sa faible efficacité spectrale. On désigne par là le rapport entre le débit en données binaires et la largeur de la bande occupée. Si chaque symbole de données contient m bits, le débit en données binaires est égal à m fois le débit en symboles, soit mDs. Quant à la bande occupée, elle est égale au double de la fréquence en "chips", c'est-à-dire à 2N fois le débit en symboles, soit 2NDs. On a donc, finalement, une efficacité spectrale égale au rapport $\frac{mDs}{2NDs}$, soit $\frac{m}{2N}$.

On pourrait penser augmenter l'efficacité spectrale en diminuant N, mais cela irait à l'encontre des qualités propres à l'étalement et, notamment, nuirait à l'immunité des transmissions vis-à-vis des perturbateurs. On pourrait aussi penser augmenter le débit en symboles, mais le phénomène d'interférences entre symboles irait en s'aggravant.

Une autre solution consiste à augmenter m, nombre de données binaires par symbole, ce qui conduit à utiliser des modulations complexes comme la modulation dite PSK ou "Phase Shift Keying" à plusieurs états de phase, qui est une modulation (ou un codage) de phase, ou la modulation dite MOK pour "M-ary Orthogonal Keying" ou modulation orthogonale d'ordre M.

On peut trouver une description de ces modulations dans deux ouvrages généraux :

- Andrew J. VITERBI : "CDMA-Principles of Spread Spectrum Communication" Addison-Wesley Wireless Communications Series, 1975,
- John G. PROAKIS : "Digital Communications McGraw-Hill International Editions, $3^{\text{ème}}$ édition, 1995.

S'agissant tout d'abord de la modulation de phase, on rappelle qu'il s'agit le plus souvent d'une modulation binaire, notée BPSK, ou quaternaire, notée QPSK. Dans le premier cas, on peut coder des symboles à un élément binaire (m=1) et dans le second des symboles à deux éléments binaires (m=2).

Ces modulations sont le plus souvent mises en oeuvre sous une forme différentielle (DBPSK, DQPSK) qui assure une bonne robustesse dans les canaux difficiles, dès lors qu'aucune boucle de récupération de phase n'est nécessaire. Cette forme différentielle est aussi très bien adaptée au traitement de la diversité des trajets de propagation.

A la réception, un démodulateur différentiel effectue la multiplication entre le signal à démoduler et sa version retardée d'une période symbole. Dans le cas de la modulation quaternaire, on utilise deux voies de signal, une voie qui traite la composante du signal en phase avec une porteuse et une autre voie qui traite la composante en quadrature avec la porteuse.

S'agissant de la modulation MOK, il s'agit d'une technique dans laquelle on associe à chaque symbole à émettre un signal pris parmi un ensemble de signaux orthogonaux. Ces signaux peuvent être des codes d'étalement d'une même famille de codes -orthogonaux. Dans ce cas, la modulation réalise aussi l'étalement. Mais ces signaux peuvent aussi ne pas être parfaitement orthogonaux. Dans ce cas les performances sont moins bonnes.

Si un symbole est constitué de m bits, il existe $2^m$ configurations possibles pour les symboles. Le nombre M de codes disponibles doit donc être au moins égal à M, avec $M=2^m$. Si la longueur des codes est N, on sait qu'on peut trouver N codes orthogonaux. On a donc M=N et le nombre de bits par symbole est donc limité à $\log_2 N$.

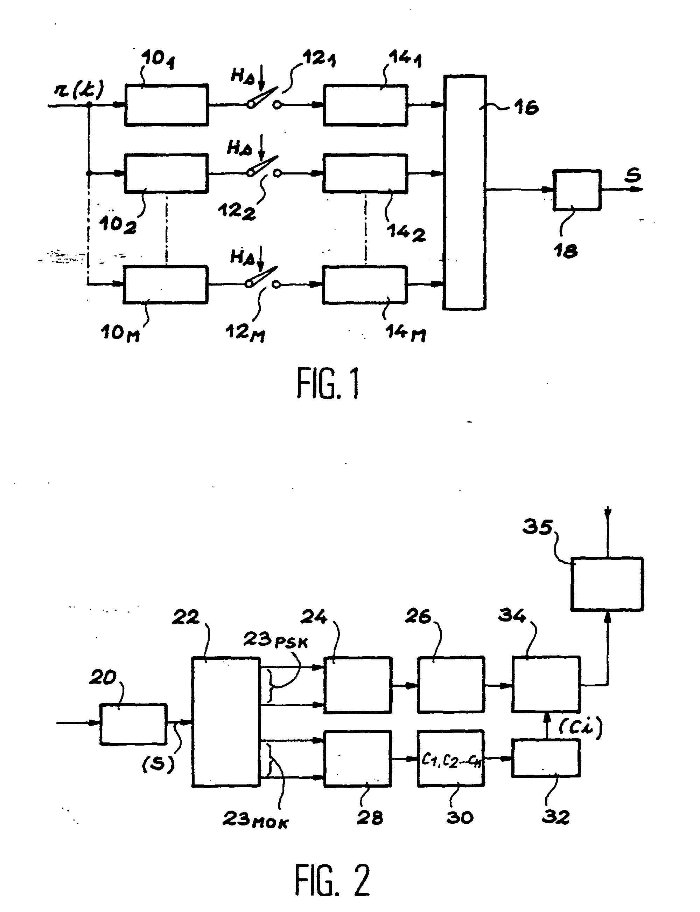

Un récepteur MOK connu est illustré sur la figure 1 annexée. On y voit une batterie de filtres adaptés $10_1$, $10_2$, ..., $10_M$ suivis d'autant d'échantillonneurs $12_1$, $12_2$, ..., $12_M$, des circuits $14_1$, $14_2$, ..., $14_M$, de détermination de l'énergie (ou de l'amplitude) du signal échantillonné, un circuit 16 de détermination du signal le plus énergétique (ou de plus grande amplitude) et qui délivre le numéro de la voie correspondant à ce signal, et enfin, un circuit 18 qui, à partir du numéro de cette voie, restitue le code correspondant donc le symbole transmis S.

La technique MOK connaît une variante dite MBOK ("M-ary Bi-Orthogonal Keying") consistant à ajouter au jeu de signaux orthogonaux utilisés dans une modulation MOK leurs opposés pour constituer un jeu de 2M signaux, qui ne sont évidemment plus tous orthogonaux entre eux. La démodulation utilise encore M corrélateurs, adaptés à chacun des M codes orthogonaux, mais nécessite en outre des moyens de récupération du signe.

Si, pour augmenter l'efficacité spectrale, on augmente d'une unité le nombre m d'éléments binaires dans chaque symbole, le nombre M de codes disponibles double, ce qui multiple par 2 le nombre de voies du récepteur. La complexité s'accroît donc beaucoup plus vite que l'efficacité spectrale. Cette technique présente donc certaines limites.

Les modulations MOK et MBOK sont utilisées dans certains systèmes de communications numériques, en liaison avec une structure de réception cohérente, laquelle nécessite la connaissance de la phase de la porteuse. L'envoi d'un préambule, avant l'émission des données utiles, est un procédé classique permettant l'estimation de cette phase. Cependant, dans les canaux soumis à des évanouissements et/ou à des trajets multiples, la phase de la porteuse subit des variations qui peuvent être rapides et que le système de réception doit détecter et compenser. Cela s'obtient généralement par l'émission périodique de préambules qui occupent alors le canal et entraînent une diminution du débit de données utiles. Selon ce schéma, les durées du préambule et du paquet de données utiles doivent être inférieures au temps de cohérence du canal (temps pendant lequel le canal est considéré comme étant stationnaire). De plus, la complexité de la structure de réception est accrue.

Pour ces raisons, l'homme de l'art préfère avoir recours à des schémas de démodulation non cohérente, ou différentiellement cohérente, qui ne nécessitent pas la connaissance de l'information de phase. Ces techniques éliminent le recours aux préambules longs, aux estimateurs de phase et aux dérotateurs de phase, au prix d'une légère perte de sensibilité. Par ailleurs, la démodulation non cohérente simplifie très fortement le traitement de la diversité des trajets de propagation puisque chaque trajet possède, entre autres, sa propre phase (et donc nécessiterait son propre estimateur de phase dans un schéma cohérent).

Un dispositif de démodulation dans un récepteur d'un système de transmission numerique à étalement de spectre est décrit dans le document US 5 583 884.

La demande de brevet français n°98 11564 déposée le 16 septembre 1998 par le présent demandeur propose un procédé de transmission numérique à modulation/démodulation mixte, qui combine la technique MOK et la technique DPSK. Selon ce document, on s'y prend de la manière suivante :

A) à l'émission :

- on groupe des données binaires à transmettre en symboles à m données ;
- on divise les m données de chaque symbole en un premier sous-groupe de $m_{MOK}$ données et en un second sous-groupe de $m_{DPSK}$ données (on a donc $m=m_{MOK}+m_{PSK}$),
- aux $m_{MOK}$ données du premier sous-groupe, on fait correspondre un code $C_i$ pris dans un ensemble de M codes d'étalement orthogonaux,
- on code les $m_{PSK}$ données du second sous-groupe par modulation différentielle de phase,
- on étale en fréquence le signal modulé différentiellement en phase par le code d'étalement $C_i$ correspondant aux données du premier sous-groupe,
- on émet le signal ainsi obtenu ;

B) à la réception :

- on soumet le signal reçu à M filtrages adaptés aux M codes d'étalement possibles,

- on détermine le filtrage adapté qui conduit au plus fort signal filtré,
- on en déduit le code d'étalement $C_i$ qui a été utilisé à l'émission et l'on restitue le premier sous-groupe de $m_{MOK}$ données correspondant,
- on sélectionne le signal filtré le plus fort, on commute ce signal sur une voie de démodulation et, dans celle-ci, on effectue une démodulation de phase et pour restituer le second sous-groupe de $m_{PSK}$ données,
- on reconstitue le symbole transmis à l'aide du premier et du second sous-groupes de données ($m=m_{MOK}+m_{PSK}$).

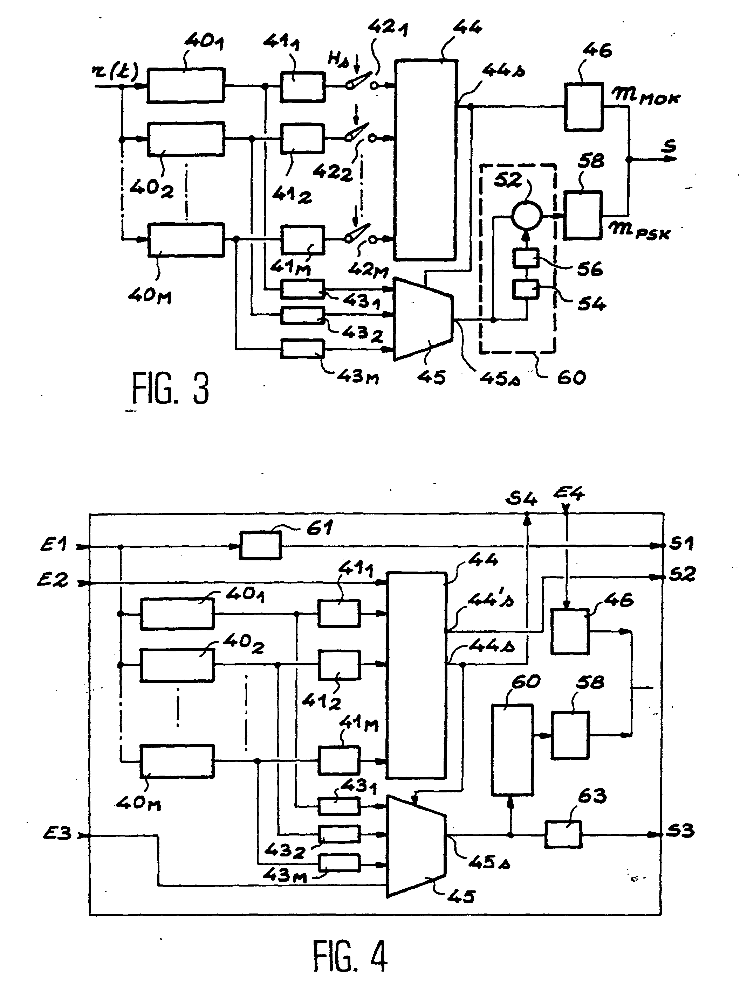

Les figures 2 et 3 annexées illustrent respectivement un émetteur et un récepteur mettant en oeuvre ce procédé.

On voit, sur la figure 2, un émetteur comprenant :

- des moyens 20 pour regrouper les données binaires à transmettre en symboles à m données ;
- des moyens 22 pour diviser les m données de chaque symbole en un premier sous-groupe $23_{MOK}$ de $m_{MOK}$ données et en un second sous-groupe $23_{PSK}$ de $m_{PSK}$ données (avec $m=m_{MOK}+m_{PSK}$) ; ces moyens 22 peuvent consister en un convertisseur série-parallèle ;
- un circuit 28 de conversion recevant les $m_{MOK}$ bits et les convertissant en une adresse dirigée vers une table de codes 30, laquelle comprend un choix de $M=2^{m_{MOK}}$ codes d'étalement orthogonaux (ou sensiblement orthogonaux) et finalement un générateur 32 du code Ci d'étalement choisi ;
- un circuit d'encodage différentiel 24, essentiellement constitué d'un multiplieur logique et d'un circuit à retard puis un modulateur PSK référencé 26;
- un circuit d'étalement de spectre 34 travaillant avec le code Ci délivré par le générateur 32 et l'appliquant au signal modulé délivré par le modulateur 26 ;
- un étage radiofréquence 35 suivi de moyens d'émission.

Le récepteur correspondant est représenté sur la figure 3. Tel que représenté, il comprend :

- une entrée destinée à recevoir un signal à traiter r(t),
- M voies de filtrage avec chacune un filtre $40_1$, $40_2$, ..., $40_M$ adapté à un code d'étalement $C_i$ pris dans un groupe de M codes,
- M moyens $41_1$, $41_2$, ..., $41_M$ de calcul de l'énergie (ou de l'amplitude) des signaux de sortie des M voies de filtrage sur un sybmole,
- des échantillonneurs $42_1$, $42_2$, ..., $42_M$,
- des moyens de sélection 44 reliés aux M moyens $41_1$, $41_2$, ..., $41_M$ et aptes à déterminer le signal de plus grande énergie (ou de plus grande amplitude), et pour délivrer sur une sortie 44s le numéro de la voie correspondant à cette énergie (amplitude) maximale,
- des moyens de commutation 45 reliés aux M filtres adaptés à travers des circuits à retard $43_1$, $43_2$, ..., $43_M$ et possédant une sortie 45s, ces moyens de commutation 45 étant aptes à commuter l'une de leurs entrées sur la sortie 45s sous la commande du numéro de voie délivré par les moyens de sélection 44,
- des moyens 46 reliés à la première sortie 44s des moyens de sélection 44 et aptes à déduire du numéro de la voie le code d'étalement Ci correspondant et à restituer un premier sous-groupe $m_{MOK}$ de données,
- des moyens de démodulation différentielle de phase reliés à la sortie 44s des moyens de commutation 45 et comprenant un multiplieur complexe 52, un circuit 54 inversant la phase et un circuit à retard 56, cet ensemble de circuits portant la référence générale 60, ainsi qu'un démodulateur PSK 58 délivrant un second sous-groupe $m_{PSK}$ de données.

Les sous-groupes de données $m_{MOK}$ et $m_{PKS}$ étant ensuite regroupés pour reconstituer le symbole S.

Dans cette technique, le nombre de bits transmis par symbole est donc :

$$m=m_{MOK}+m_{PSK}$$

Comme exposé plus haut, la plus grande famille de codes orthogonaux de longueur L contient L codes (on dit que la famille est de cardinal N=L). Mais, comme noté plus haut, les signaux peuvent ne pas être parfaitement orthogonaux auquel cas les performances sont moins bonnes. Dans la pratique, l'augmentation du nombre de codes augmente la complexité du récepteur de façon très significative. Ce problème de complexité impose une limitation du nombre des codes utilisables. Ainsi, ne tire-t-on pas complètement profit de l'accroissement de l'efficacité spectrale autorisée théoriquement par la modulation MOK. Ce phénomène est d'autant plus critique que N est grand, ce qui est typique des applications de l'étalement de spectre lorsqu'on veut disposer d'un système de transmission robuste.

Le but de la présente invention est justement de proposer une solution à ce problème. A cette fin, l'invention propose des modifications du récepteur qui vient d'être décrit de telle sorte que ce récepteur puisse constituer un module récepteur (ou récepteur élémentaire) apte à être monté en cascade (autrement dit en série) avec d'autres modules identiques. On forme ainsi un récepteur composé de plusieurs modules travaillant avec un nombre de codes supérieur au nombre propre à chaque module, sans pour autant que la complexité de chaque module soit augmentée.

A titre d'exemple, on suppose une longueur de séquence de L=32, ce qui correspond à un nombre de codes N=32.

On suppose en outre un nombre d'états de phase de la modulation DPSK de 2, soit $m_{PSK}=2$ (cas de la modulation QPSK à quatre états de phase).

Pour un module récepteur, on utilise un nombre Nc=8. Le nombre maximum de bits transmis dans un symbole est :

$$n_{max}=m_{MOKmax}+m_{PSK}=\log_2 N+2=5+2=7$$

Le nombre maximum de bits accessibles à un module récepteur pour un symbole :

$$n=m_{MOK}+m_{PSK}=\log_2 N_c+2=3+2=5$$

Pour cet exemple, le nombre de bits transmis par symbole en fonction du nombre de modules récepteurs est donné dans le tableau suivant, qui permet de comparer les débits binaires et l'efficacité spectrale.

| Nombre de modules récepteurs en cascade | Nombre de bits transmis par symbole | Débit binaire pour une fréquence chip de 60 MHz | Efficacité spectrale pour une liaison à 2 Mbits/s |
|---|---|---|---|
| 1 | 5 | 9,3 Mbits/s | 0,115 bit/s/Hz |
| 2 | 6 | 11,2 Mbits/s | 0,138 bit/s/Hz |
| 4 | 7 | 13,1 Mbits/s | 0,161 bit/s/Hz |

Le caractère modulaire du récepteur de l'invention offre une très grande souplesse dans la conception d'un récepteur et permet d'obtenir des débits binaires élevés sans accroître la complexité des circuits. Par ailleurs, le caractère standard du module de base permet d'abaisser les coûts et d'améliorer les rendements de fabrication.

**Exposé de l'invention**

Le module récepteur de l'invention reprend certains moyens du récepteur déjà décrit sur la figure 3 et il est caractérisé en ce qu'il est modifié pour pouvoir être monté en cascade avec d'autres modules similaires. A cette fin, les moyens de sélection délivrent en outre, sur une seconde sortie, la valeur de l'énergie (ou de l'amplitude) maximale. Par ailleurs, le module récepteur comprend des entrées et des sorties supplémentaires, avec les interconnexions appropriées à l'intérieur du module, pour permettre la mise en cascade. Pour ce qui est des entrées, le module comprend, en plus de la première entrée recevant le signal à traiter :

- une deuxième entrée reliée à l'entrée desdits moyens de sélection lesquels reçoivent donc, en plus des M signaux délivrés par les M voies de filtrage, le signal véhiculé par cette (M+1)$^{ème}$ voie,
- une troisième entrée reliée à l'entrée desdits moyens de commutation lesquels reçoivent donc, en plus des M signaux délivrés par les M voies de filtrage, le signal appliqué sur cette troisième entrée,
- une quatrième entrée reliée à l'entrée des moyens aptes à déduire d'un numéro de voie le code d'étalement correspondant.

Pour ce qui est des sorties supplémentaires, elles comprennent :

- une première sortie reliée à la première entrée à travers un moyen à retard,
- une deuxième sortie reliée à la deuxième sortie des moyens de sélection délivrant la valeur maximale de l'énergie (ou de l'amplitude) sélectionnée,
- une troisième sortie reliée, à travers un moyen à retard, à la sortie des moyens de commutation,

-   une quatrième sortie reliée à la première sortie des moyens de sélection délivrant le numéro de la voie ayant l'énergie (l'amplitude) maximale.

En outre, le module dispose d'entrées et de sorties nécessaires à l'échange de signaux de contrôle, notamment pour la synchronisation des modules entre eux.

La présente invention a également pour objet un récepteur composé d'une pluralité (au moins 2) de tels modules récepteurs. Chaque module récepteur travaille avec un groupe de M codes particuliers, les première, deuxième et troisième entrées d'un module récepteur de rang i étant reliées aux première, deuxième, troisième sorties correspondantes du module récepteur de rang directement inférieur (i-1). Le dernier module récepteur joue un rôle particulier et est appelé module maître, ce module maître recevant sur sa quatrième entrée tous les numéros de codes délivrés par les quatrièmes sorties des (n-1) modules récepteurs précédents, tous ces numéros formant un numéro de code global. Ce module maître déduit de ce numéro global le code d'étalement correspondant et restitue un premier sous-groupe de ($m_{MOK}$) données. Les moyens de démodulation de phase de ce module maître reçoivent le dernier signal commuté et effectuent la démodulation pour délivrer un second groupe de $m_{PSK}$ données, ce module maître reconstituant alors le symbole global transmis. Le module maître détermine également le ou les signaux nécessaires à la synchronisation des autres modules.

Dans un tel récepteur, les moyens de démodulation de phase des (n-1) modules récepteurs précédant le module maître ne sont pas exploités.

## Brève description des dessins

-   la figure 1, déjà décrite, illustre un récepteur MOK ;
-   la figure 2, déjà décrite, est un schéma d'un émetteur MOK-DPSK ;
-   la figure 3, déjà décrite, est un schéma d'un récepteur correspondant ;
-   la figure 4 illustre un module récepteur conforme à la présente invention ;
-   la figure 5 montre un récepteur composé de plusieurs modules récepteurs montés en cascade.

## Description détaillée de modes particuliers de réalisation

Le module récepteur représenté sur la figure 4 comprend des moyens déjà représentés sur la figure 3 et qui portent les mêmes références, à savoir les filtres adaptés $40_1$, $40_2$, ..., $40_M$, les moyens de sélection 44, les moyens de commutation 45, les moyens de décodage 46, les moyens de démodulation 58, 60. Les échantillonneurs $42_1$, $42_2$, ..., $42_M$ ne sont pas représentés pour simplifier.

Le module représenté comprend quatre entrées E1, E2, E3, E4 et quatre sorties S1, S2, S3, S4. L'entrée E1 est reliée à la sortie S1 à travers un moyen de retard 61. L'entrée E2 est reliée à l'entrée des moyens de sélection 44. La sortie 45s du moyen de commutation 45 est reliée à la sortie S3 à travers un moyen à retard 63. Le moyen de sélection 44 comprend une seconde sortie 44's qui délivre l'énergie (ou l'amplitude) du signal le plus énergétique. Cette seconde sortie 44's est reliée à la sortie S2.

Les signaux appliqués sur les entrées d'un tel module sont les suivants :

sur E1 : signal d'entrée à traiter,
sur E2 : valeur maximale de l'énergie (ou de l'amplitude) trouvée dans le module récepteur précédent, ou zéro, s'il s'agit du premier module,
sur E3 : signal commuté délivré par le module précédent ou zéro s'il s'agit du premier module,
sur E4 : numéro (ou indice) de la voie correspondant au signal d'énergie (ou d'amplitude) maximale.

Les signaux délivrés par les sorties sont les suivants :

par S1 : signal à traiter retardé destiné au module récepteur suivant,
par S2 : valeur de l'énergie (ou de l'amplitude) maximale trouvée dans le module récepteur,
par S3 : signal commuté correspondant à l'énergie (ou l'amplitude) maximale,
par S4 : numéro (ou indice) de la voie correspondant au signal commuté d'énergie (d'amplitude) maximale.

Le fonctionnement de ce module récepteur est le suivant.

Les moyens de sélection 44 comparent les énergies de M+1 signaux, à savoir les énergies des M signaux de sortie des M filtres adaptés et la valeur de l'énergie appliquée sur la deuxième entrée E2 du module et correspondant à la plus grande énergie venant du module récepteur de rang précédent (ou zéro s'il s'agit du premier module). Deux cas sont à envisager :

- si le signal le plus énergétique est l'un des M signaux filtrés, les moyens de sélection 44 délivrent normalement la valeur maximale de l'énergie et le numéro de la voie correspondante, tandis que les moyens de commutation 45 délivrent le signal commuté correspondant sur la troisième sortie S3,
- si la valeur maximale est celle qui correspond au signal appliqué sur la deuxième entrée E2, c'est-à-dire au signal provenant du module précédent, alors les moyens de commutation 45 transmettent directement le signal appliqué sur la troisième entrée E3 vers la troisième sortie S3, ce signal passant donc d'un module récepteur de rang i-1 au module récepteur de rang i+1.

Si le module récepteur est l'unique module (un signal nul étant appliqué sur les entrées E2 et E3), les moyens de démodulation 58-60 fonctionnent normalement, et le module délivre le symbole reconstitué $m_{MOK}+m_{PSK}$. Si le module récepteur est suivi d'autres modules, cette reconstitution est reportée sur le dernier module (module maître) et les moyens de démodulation 58-60 sont inexploités.

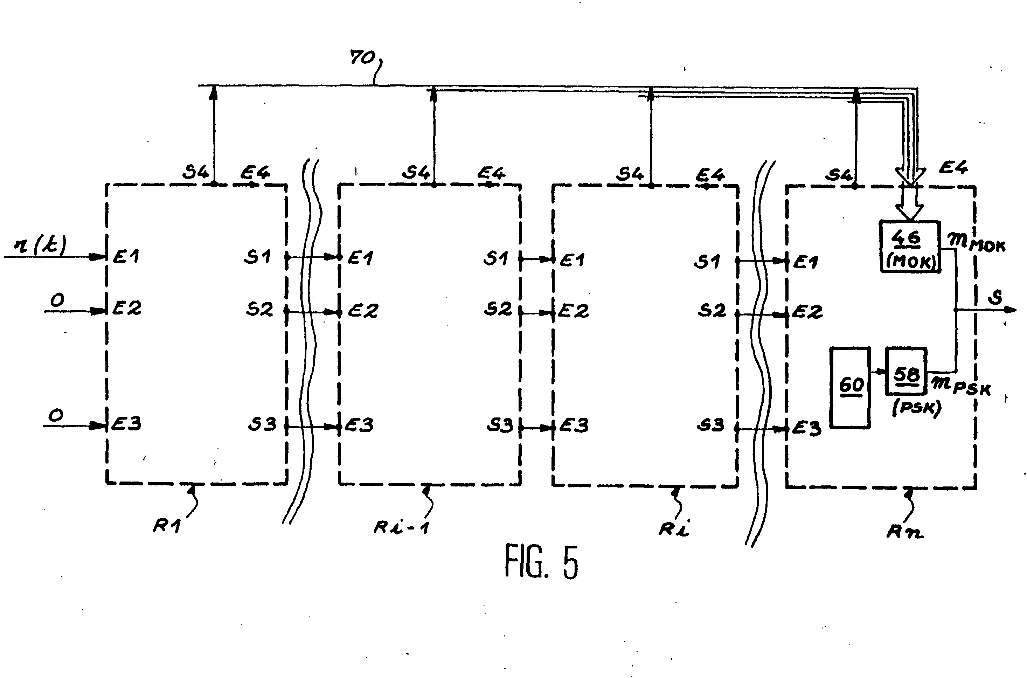

La figure 5 illustre un récepteur composé d'une pluralité de n modules $R_1$, ..., $R_{i-1}$, $R_i$, ..., $R_n$, montés en cascade. Les entrées E1, E2, E3 d'un module $R_i$ de rang i sont reliées aux sorties S1, S2, S3 du module précédent $R_{i-1}$ de rang i-1. Les sorties S4 de chaque module sont reliées à l'entrée E4 du dernier module $R_n$ par une connexion 70. Ces sorties délivrent les numéros des voies et ces numéros constituent un numéro global à partir duquel les moyens 46 du dernier module $R_n$ restituent le sous-groupe $m_{MOK}$ des données. Les moyens de démodulation 58, 60 de ce dernier module restituent le sous-groupe $m_{DPSK}$ des données. Ces deux sous-groupes permettent au module maître $R_n$ de reconstituer le symbole S.

## Revendications

1. Module récepteur pour transmission numérique à étalement de spectre à modulation orthogonale d'ordre M et à modulation de phase différentielle, ce module récepteur comprenant :

   - une première entrée (E1) destinée à recevoir un signal à traiter (r(t)),
   - M voies de filtrage avec chacune un filtre ($40_1$, $40_2$, ..., $40_M$) adapté à un code d'étalement ($C_i$) pris dans un groupe de M codes,
   - M moyens ($41_1$, $41_2$, ... , $41_M$) de calcul de l'énergie, ou de l'amplitude, des signaux de sortie des M voies de filtrage sur un symbole,
   - des moyens de sélection (44) reliés aux M moyens de calcul de l'énergie, ou de l'amplitude, ces moyens de sélection (44) étant aptes à déterminer le signal de plus grande énergie, ou de plus grande amplitude, et pour délivrer sur une première sortie (44s) le numéro de la voie correspondant à cette énergie, ou amplitude maximale,
   - des moyens de commutation (45) reliés aux M filtres adaptés à travers M circuits à retard ($43_1$, $43_2$, ..., $43_M$) et possédant une sortie (45s), ces moyens de commutation (45) étant aptes à commuter l'une de ses entrées sur la sortie (45s) sous la commande du numéro de voie délivré par les moyens de sélection (44),
   - des moyens (46) reliés à la première sortie (44s) des moyens de sélection (44) et aptes à déduire du numéro de la voie le code d'étalement (Ci) correspondant et à restituer un premier sous-groupe ($m_{MOK}$) de données,
   - des moyens de démodulation différentielle de phase (58, 60) reliés à la sortie (45s) des moyens de commutation (45) et aptes à restituer un second sous-groupe ($m_{PSK}$) de données,

   ce module récepteur comprenant en outre :

   a) les moyens de sélection (44) aptes à délivrer en outre sur une seconde sortie (44's) la valeur de l'énergie, ou de l'amplitude, maximale sélectionnée,
   b) des entrées et des sorties supplémentaires aptes à permettre la mise en cascade de plusieurs tels modules récepteurs,

   i) les entrées supplémentaires comprenant :

   - une deuxième entrée (E2) reliée à l'entrée desdits moyens de sélection (44) lesquels reçoivent donc, en plus des M signaux délivrés par les M voies de filtrage, le signal véhiculé par cette (M+1)$^{\text{ème}}$ voie,
   - une troisième entrée (E3) reliée à l'entrée desdits moyens de commutation (45) lesquels reçoivent donc, en plus des M signaux délivrés par les M voies de filtrage, le signal appliqué sur cette troisième entrée (E3),

- une quatrième entrée (E4) reliée à l'entrée des moyens (46) aptes à déduire d'un numéro de voie le code d'étalement correspondant ($C_u$),

ii) les sorties supplémentaires comprenant :

- une première sortie (S1) reliée à la première entrée (E1) à travers un moyen à retard (61),
- une deuxième sortie (S2) reliée à la deuxième sortie (44 is) des moyens de sélection (44) délivrant la valeur maximale de l'énergie, /ou de l'amplitude, sélectionnée,
- une troisième sortie (S3) reliée, à travers un moyen à retard (63), à la sortie (45s) des moyens de commutation (45),
- une quatrième sortie (S4) reliée à la première sortie (44s) des moyens de sélection (44) délivrant le, numéro de la voie ayant l'énergie, ou l'amplitude, maximale.

2. Récepteur pour transmission numérique à modulation orthogonale et à modulation de phase différentielle, comprenant une pluralité de modules récepteurs ($R_1$, ..., $R_i$, $R_{i-1}$, ..., $R_n$) conformes à la revendication 1, ces modules étant mis en cascade, chacun de ces n modules récepteurs travaillant avec un groupe de M codes particuliers, les entrées (E1, E2, E3) d'un module récepteur de rang i étant reliées aux sorties correspondantes (S1, S2, S3) du module récepteur de rang (i-1), le dernier module récepteur de rang n ($R_n$) jouant un rôle particulier et étant appelé module maître, ce module maître recevant sur sa quatrième entrée (E4) tous les numéros des voies délivrés par les quatrièmes sorties (S4) des (n-1) modules récepteurs précédents, tous ces numéros formant un numéro global, les moyens (46) reliée à la quatrième entrée (E4) de ce module maître ($R_n$) déduisant de ce numéro global le code d'étalement correspondant et restituant un premier sous-groupe de ($m_{MOK}$) données, les moyens de démodulation de phase (58, 60) de ce module maître recevant le dernier signal commuté et effectuant la démodulation pour délivrer un second groupe de ($m_{DPSK}$) données, ce module maître ($R_n$) reconstituant alors le symbole global transmis,
   et les moyens de démodulation des (n-1) modules récepteurs précédant le module maître ($R_n$) ne sont pas exploités.

3. Récepteur selon la revendication 2, dans lequel, dans chaque module récepteur de rang i ($R_i$), les moyens de sélection (44) comparent les énergies de M+1 signaux, à savoir les énergies des M signaux de sortie des M filtres adaptés et la valeur de l'énergie appliquée sur la deuxième entrée (E2) du module et correspondant à la plus grande énergie venant du module récepteur de rang précédent, ces moyens de sélection fonctionnant de la manière suivante :

- si le signal le plus énergétique est l'un des M signaux filtrés, lesdits moyens de sélection (44) délivrent normalement la valeur maximum de l'énergie et le numéro de la voie, et les moyens de commutation (45) délivrent le signal commuté correspondant sur la troisième sortie (S3),
- si la valeur maximale est celle qui correspond au signal appliqué sur la deuxième entrée (E2), c'est-à-dire au signal provenant du module précédent ($R_{i-1}$), alors lesdits moyens de commutation (45) transmettent le signal appliqué sur la troisième entrée (E3) directement vers la troisième sortie (S3), ce signal passant donc du module récepteur de rang i-1 ($R_{i-1}$) au module récepteur de rang i+1 ($R_{i+1}$).

**Patentansprüche**

1. Empfangsmodul zur digitalen Spreizspektrumübertragung mit orthogonaler Modulation M-ter Ordnung und mit differentieller Phasenmodulation,
   wobei dieser Empfangsmodul umfasst:

- einen ersten Eingang (E1), bestimmt für den Empfang eines zu verarbeitenden Signals (r(t)),
- M -Filterkanäle, jeder mit einem Filter ($40_1$, $40_2$, ..., $40_M$), angepasst an einen einer Gruppe von M Codes entnommenen Spreizcode ($C_i$),
- M Einrichtungen ($41_1$, $41_2$, ..., $41_M$) zur Berechnung der Energie oder der Amptitude der Ausgangssignale der M Filterkanäle in einem Symbol,
- Selektionseiririchtungen (44), verbunden mit den M Energie- oder Amplitudenberechnungseinrichtungen, wobei diese Selektionseinrichtungen (44) fähig sind, das.Signal mit der größten Energie oder der größten Amplitude zu bestimmen und an einem ersten Ausgang (44s) die Nummer des Kanals zu liefern, der dieser maximalen Energie oder Amplitude entspricht,

- Schalteinrichtungen (45), die durch M Verzögerungsschaltungen ($43_1$, $43_2$,..., $43_M$) mit den M Filtern verbunden sind und einen Ausgang (45s) besitzen, wobei diese Schalteinrichtungen (45), gesteuert durch die von den Selektionseinrichtungen (44) gelieferte Kanalnummer, fähig sind, einen ihrer Eingänge auf den Ausgang (45s) durchzuschalten,
- Einrichtungen (46), verbunden mit dem ersten Ausgang (44s) der Selektionseinrichtungen (44) und fähig, aus der Kanalnummer den entsprechenden Spreizcode ($C_i$) abzuleiten und eine erste Daten-Teilgruppe ($m_{MOK}$) auszugeben,
- differentielle Phasenmodulationseinrichtungen (58, 60), verbunden mit dem Ausgang (45s) der Schalteinrichtungen (45) und fähig zur Ausgabe einer zweiten Daten-Teilgruppe ($m_{PKS}$),

wobei dieser Empfangsmodul außerdem umfasst:

a) die zusätzliche Fähigkeit der Selektionseinrichtungen (44), auf einem zweiten Ausgang (44's) den Wert der maximalen selektierten Energie oder Amplitude zu liefern,
b) zusätzliche Eingänge und Ausgänge, um mehrere dieser Empfangsmodule kaskadenartig zu schalten,

i) wobei die zusätzlichen Eingänge umfassen:

- einen zweiten Eingang (E2), verbunden mit dem Eingang der genannten Selektionseinrichtungen (44), die folglich -zusätzlich zu den durch die M Filterkanäle gelieferten M Signalen - das durch diesen (M+1)-ten Kanal übertragene Signal empfangen,
- einen dritten Eingang (E3), verbunden mit dem Eingang der genannten Schalteinrichtungen (45), die folglich - zusätzlich zu den durch die M Filterkanäle gelieferten M Signalen - das in diesen dritten Eingang (E3) eingespeiste Signal empfangen,
- einen vierten Eingang (E4), verbunden mit dem Eingang der Einrichtungen (46), die fähig sind, den entsprechenden Spreizcode ($C_u$) aus einer Kanalnummer abzuleiten,

ii) wobei die zusätzlichen Ausgänge umfassen:

- einen ersten Ausgang (S1), durch eine Verzögerungseinrichtung (61) mit dem ersten Eingang (E1) verbunden,
- einen zweiten Ausgang (S2), mit dem zweiten Ausgang (44's) der Selektionseinrichtungen (44) verbunden, die den Wert der maximalen selektierten Energie oder Amplitude liefern,
- einen dritten Ausgang (S3), durch eine Verzögerungseinrichtung (63) mit dem Ausgang (45s) der Schalteinrichtungen (45) verbunden,
- einen vierten Ausgang (S4), mit dem ersten Ausgang (44s) der Selektionseinrichtungen (44) verbunden, welche die Nummer des Kanals mit der maximalen Energie oder Amplitude liefern.

2. Empfänger zur digitalen Übertragung mit orthogonaler Modulation und mit differentieller Phasenmodulation, eine Vielzahl von Empfängermodulen ($R_1$, ..., $R_i$, $R_{i-1}$, ..., $R_n$) nach Anspruch 1 umfassend, wobei diese Module kaskadenartig geschaltet sind, jeder dieser n Empfangsmodule mit einer Gruppe von M besonderen bzw. eigenen Codes arbeitet, die Eingänge (E1, E2, E3) eines Empfangsmoduls des Rangs i mit den entsprechenden Ausgängen (S1, S2, S3) des Empfangsmoduls des Rangs (i-1) verbunden sind, der letzte Empfangsmodul des Rangs n ($R_n$) eine besondere Rolle spielt und Mastermodul genannt wird, wobei dieser Mastermodul auf seinem vierten Eingang (E4) alle durch die vierten Ausgänge (S4) der (n-1) vorhergehenden Empfangsmodule gelieferten Kanalnummern erhält und alle diese Nummern eine Gesamtnummer bilden, die mit dem vierten Eingang (E4) dieses Mastermoduls verbundenen Einrichtungen (46) aus dieser Gesamtnummer den entsprechenden Spreizcode ableiten und eine erste Daten-Teilgruppe ($m_{MOK}$) ausgeben, die Phasendemodulationseinrichtungen (58, 60) dieses Mastermoduls das letzte geschaltete Signal erhalten und die Demodulation durchführen, um eine zweite Daten-Teilgruppe ($m_{DPSK}$) zu liefern, und dieser Mastermodul ($R_n$) dann das übertragene Gesamtsymbol ausgibt, wobei die Demodulationseinrichtungen der (n-1) dem Mastermodul vorgeschalteten Empfangsmodule nicht genutzt werden.

3. Empfänger nach Anspruch 2, bei dem in jedem Empfangsmodul des Rangs i ($R_i$) die Selektionseinrichtungen (44) einen Vergleich durchführen zwischen den Energien von M+1 Signalen, nämlich den Energien der M Ausgangssignale der M angepassten Filter und dem Wert der in den zweiten Eingang (E2) des Moduls eingespeisten Energie, die der größten Energie entspricht, die von dem Empfangsmodul des vorhergehenden Rangs stammt, wobei diese

**EP 1 041 730 B1**

Selektionseinrichtungen folgendermaßen funktionieren:

- wenn das energetischste Signal eines der M gefilterten Signale ist, liefern die Selektionseinrichtungen (44) normalerweise den Höchstwert der Energie und die Kanalnummer, und die Schalteinrichtungen (45) liefern das entsprechende, auf den dritten Ausgang (S3) geschaltete Signal,
- wenn der Höchstwert derjenige ist, der dem in den zweiten Eingang (E2) eingespeisten Signal entspricht, das heißt dem von dem vorhergehenden Modul ($R_{i-1}$) stammenden Signal, dann übertragen die genannten Schalteinrichtungen (45) das in den dritten Eingang (E3) eingespeiste Signal direkt zum dritten Ausgang (S3), wobei dieses Signal folglich vom Empfangsmodul des Rangs i-1 ($R_{i-1}$) zum Empfangsmodul des Rangs i+1 ($R_{i+1}$) übertragen bzw. durchgereicht wird.

**Claims**

1. Receiver module for differential phase modulation and M order orthogonal modulation spread spectrum digital transmission, said receiver module comprising:

   - a first input (E1) for receiving a signal to be processed (r(t)),
   - M filtered channels, each with a filter ($40_1$, $40_2$, ..., $40_M$) matched to a spread code (Ci) taken from within a group of M codes,
   - M means ($41_1$, $41_2$, ..., $41_M$) for calculating the energy (or amplitude) of the output signals of the M filtering channels on a symbol,
   - selection means (44) connected to the M energy or amplitude calculating means, said selection means (44) being able to determine the highest energy or amplitude signal and for delivering on a first output (44s) the number of the channel corresponding to said maximum energy or amplitude,
   - switching means (45) connected to M matched filters across M delay circuits ($43_1$, $43_2$, ..., $43_M$) and having an output (45s), said switching means (45) being able to switch one of its inputs to the output (45s) under the control of the channel number delivered by the selection means (44),
   - means (46) connected to the first output (44s) of the selection means (44) and able to deduce from the number of the channel the corresponding spread code (Ci) and to restore a first data subgroup (mMOK),
   - phase differential demodulation means (58, 60) connected to the output (45s) of the switching means (45) and able to restore a second data subgroup (mPSK),

   said receiver module also comprising:

   a) selection means (44) also able to deliver to a second output (44's) the selected maximum energy or amplitude value,
   b) supplementary inputs and outputs permitting the cascading of several such receiver modules,

   i) the supplementary inputs comprising:

   - a second input (E2) connected to the input of said selection means (44), which consequently receive, besides the M signals delivered by the M filtering channels, the signal carried by said (M+1)th channel,
   - a third input (E3) connected to the input of said switching means (45), which consequently receive, besides the M signals delivered by the M filtering channels, the signal applied to said third input (E3),
   - a fourth input (E4) connected to the input of the means (46) able to deduce from a channel number the corresponding spread code (Cu),

   ii) the supplementary outputs comprising:

   - a first output (S1) connected to the first input (E1) across a delay means (61),
   - a second output (S2) connected to the second output (44's) of the selection means (44) delivering the selected maximum energy or amplitude value,
   - a third output (S3) connected, across a delay means (63), to the output (45s) of the switching means (45),
   - a fourth output (S4) connected to the first output (44s) of the selection means (44) delivering the number of the channel having the maximum energy or amplitude.

**2.** Receiver for differential phase modulation and orthogonal modulation digital transmission, comprising a plurality of receiver modules ($R_1$, ..., Ri, Ri-1, ..., Rn) in accordance with claim 1, said modules being cascaded, each of said n receiver modules working with a group of M particular codes, the inputs (E1, E2, E3) of a receiver module of rank i being connected to the corresponding outputs (S1, S2, S3) of the receiver module of rank (i-1), the final receiver module of rank n (Rn) fulfilling a particular function and being called the master module, said master module receiving on its fourth input (E4) all the numbers of channels delivered by the fourth outputs (S4) of the (n-1) preceding receiver modules, all said numbers forming a global number, the means (46) connected to the fourth input (E4) of said master module (Rn) deducing from said global number the corresponding spread code and restoring a first data subgroup (mMOK), the phase demodulation means (58, 60) of said master module receiving the final switched signal and performing demodulation in order to deliver a second data subgroup (umPSK), said master module (Rn) then reconstructing the transmitted global system, and the demodulation means of the (n-1) receiver modules preceding the master module (Rn) are not used.

**3.** Receiver according to claim 2, wherein, in each receiver module of rank i (Ri), the selection means (44) compare the energies of M+1 signals, namely the energies of M output signals of M matched filters and the value of the energy applied to the second input (E2) of the module and corresponding to the highest energy from the receiver module of the preceding rank, said selection means functioning in the following way:

- if the highest energy signal is one of the M filtered signals, said selection means (44) normally deliver the maximum energy value and the number of the channel, and the switching means (45) deliver the corresponding switched signal to the third output (S3),
- if the maximum value is that corresponding to the signal applied to the second input (E2), i.e. to the signal from the preceding module ($R_{i-1}$), then said switching means (45) transmit the signal applied to the third input (E3) directly to the third output (S3), said signal consequently passing from the receiver module of rank i-1 (Ri-1) to the receiver module of rank i+1 (Ri+1).

$n(t)$

$10_1$　$H_0$　$12_1$　$14_1$

$10_2$　$H_0$　$12_2$　$14_2$

16

S

18

$10_M$　$H_0$　$12_M$　$14_M$

## FIG. 1

35

22　$23_{PSK}$　24　26　34

20

(S)

$23_{MOK}$　28　30　32

$C_1, C_2 \dots C_H$

$(C_i)$

## FIG. 2

FIG. 3

FIG. 4

FIG. 5

EP 1 041 730 B1